# EUROPEAN PATENT APPLICATION

(11) **EP 4 848 251 A1**
(43) Date of publication of application: **02.12.2026**
(21) Application number: 25178906.1
(22) Date of filing: 27.05.2025
(51) Int. Cl.: G08G 1/00

(54) **RECOGNIZING A DRIVING BEHAVIOR OF A VEHICLE**

(71) Applicant: HERE Global B.V., 5611 ZT Eindhoven (NL)
(72) Inventor: Beaurepaire, Jerome, 92400 COURBEVOIE (FR)
(74) Representative: Sariot, Eray

(57) **Abstract**

It is inter-alia disclosed a method for recognizing a driving behavior of a vehicle, the method comprising:
- obtaining (401) first vehicle sensor information, wherein said first vehicle sensor information is associated with an environment (106) of a first vehicle (101), wherein said environment (106) of said first vehicle (101) includes a second vehicle (102), and wherein said first vehicle sensor information at least partially represents the driving behavior of said second vehicle (102),
- identifying (403) an unusual driving behavior of said second vehicle (102), wherein said identifying an unusual driving behavior of said second vehicle (102) comprises at least partially analyzing said first vehicle sensor information by means of a machine learning model (500);
- in response to identifying said unusual driving behavior of said second vehicle (102), determining (404) an action to minimize a risk associated with said unusual driving behavior.

## Description

### TECHNOLOGICAL FIELD

The present disclosure is related to but not limited to a method, an apparatus, a computer program, a system for recognizing a driving behavior of a vehicle, in particular for recognizing a driving behavior of a second vehicle.

### BACKGROUND

Many road accidents or dangerous situations arise when a vehicle shows an unusual driving behavior, for example when the vehicle experiences distress such as a mechanical and/or electrical failure, a distracted driver (e.g. when the driver gets tired), or a medical emergency of the driver (e.g. when the driver loses consciousness). Traditional advanced driving assistance systems focus on monitoring the vehicle and the driver to respond to a situation when the vehicle experiences distress in order to minimize a risk for the vehicle and its driver and passengers as well as surrounding vehicles and their drivers and passengers associated with this situation, for example advanced driving assistance systems may recognize that the driver experiences a medical emergency and stop the vehicle. However, this requires that the vehicle is equipped with such an advanced driving assistance system; otherwise the risk persists.

### SUMMARY OF SOME EXEMPLARY EMBODIMENTS

It is thus one of the objects of the present disclosure to provide a solution where a risk associated with an unusual driving behavior of a vehicle is minimized even in situations where the vehicle is not equipped with an advanced driving assistance system or where the advanced driving assistance system does not perform an action to minimize the risk.

According to an exemplary aspect of the invention, a method for recognizing a driving behavior of a vehicle, the method comprising:
- obtaining first vehicle sensor information, wherein the first vehicle sensor information is associated with an environment of a first vehicle, wherein the environment of the first vehicle includes a second vehicle, and wherein the first vehicle sensor information at least partially represents the driving behavior of the second vehicle;
- identifying an unusual driving behavior of the second vehicle, wherein the identifying an unusual driving behavior of the second vehicle comprises at least partially analyzing the first vehicle sensor information by means of a machine learning model;
- in response to identifying the unusual driving behavior of the second vehicle, determining an action to minimize a risk associated with the unusual driving behavior.

The disclosed method may serve for recognizing a driving behavior of the second vehicle.

The disclosed method may be performed by one apparatus (e.g. an apparatus of the apparatuses disclosed below like the first vehicle or a vehicle unit of the first vehicle or a remote device like a server or an traffic infrastructure device).

Alternatively, the disclosed method may also be performed by at least two apparatus (e.g. at least two apparatuses of the apparatuses disclosed below like the first vehicle or a vehicle unit of the first vehicle or a remote device like a server or an traffic infrastructure device). Considering the example that the disclosed method is performed by two apparatuses, this may be understood to mean that both apparatuses at least partially perform the disclosed method, i.e. one apparatus of these two apparatuses performs some steps of the disclosed method and that the other apparatus of these two apparatuses performs the other steps of the disclosed method. It is however to be understood that the invention is not limited to this example.

A vehicle (e.g. the first vehicle and the second vehicle) may be understood to be a motor vehicle, in particular a car, a van (e.g. a delivery van), a lorry or a truck.

Obtaining information (e.g. vehicle sensor information such as the first vehicle sensor information) may be understood to mean receiving (e.g. by means of a communication interface) or capturing (e.g. by means of a sensor like a distance sensor or an imaging sensor) or determining (e.g. by means of a processor) the information. Moreover, obtaining information (e.g. vehicle sensor information such as the first vehicle sensor information) may be understood to mean obtaining the information successively (e.g. by successively capturing or receiving the information, e.g. in a plurality of subsequent steps) or at once (e.g. by receiving the information at once, e.g. in a single step).

Sensor information may be understood to be information captured by one or more sensors that (e.g. qualitatively or quantitatively) represents one or more events or changes in an environment of these sensors detected by these sensors at a capture time or over a capture period or continually. An event or change in the environment of a sensor is for example an event associated with or a change of a physical quantity (e.g. acceleration, orientation, shock, speed, distance, etc.). Therein, the environment of a sensor may be the environment monitored by the sensor, e.g. the environment in which an event associated with or a change of a physical quantity is detectable by the sensor.

Accordingly, vehicle sensor information may be understood to be or to include sensor information captured by one or more sensors of a vehicle (e.g. over a capture period). That vehicle sensor information is associated with an environment of a vehicle may be understood to mean that the vehicle sensor information is or includes sensor information captured by one or more sensors of the vehicle monitoring at least a part of the environment of the vehicle (e.g. over a capture period). In other words, vehicle sensor information associated with an environment of a vehicle may represent one or more events or changes detected by one or more sensors of a vehicle monitoring at least one or more parts of the environment of the vehicle. Therein, the environment of the vehicle may be understood to at least partially be or to comprise the environment of the vehicle monitored by the one or more sensors of the vehicle, for example the environment monitored by each of the one or more sensors of the vehicle is a respective part of the environment of the vehicle.

For example, the first vehicle sensor information that is associated with the environment of the first vehicle may be or may include sensor information captured by one or more sensors of the first vehicle monitoring at least one or more parts of the environment of the first vehicle (e.g. over a capture period). In case the disclosed method is at least partially performed by the first vehicle or a vehicle unit of the first vehicle, the first vehicle sensor information may be (e.g. successively) obtained by the first vehicle or the vehicle unit of the first vehicle by (e.g. successively) capturing the first vehicle sensor information by one or more sensors of the first vehicle (e.g. over a capture period); and, in case the disclosed method is at least partially performed by a remote device like a server or an traffic infrastructure device, the first vehicle sensor information may be obtained (e.g. successively or at once) by the remote device by receiving the first vehicle sensor information (e.g. successively or at once) via a V2X-communication link (e.g. over a capture period).

V2X (vehicle-to-everything) relates to a wireless communication technology enabling a wireless communication between a vehicle and any entity (e.g. another vehicle or a remote device) that may affect, or may be affected by, the vehicle. Example standards for V2X communication are (i) IEEE 802.11p specified by the IEEE (Institute of Electrical and Electronics Engineers) and (ii) cellular V2X (C-V2x) specified by the 3GPP (3rd Generation Partnership Project) as part of the 4G and 5G specifications. The IEEE 802.11p specification is currently available on the website https://www.ieee.org/; and the 3GPP specifications are currently available on the website https://www.3gpp.org/. It is to be understood that the invention is not limited to these example standards. According to the present disclosure, any wireless communication technology enabling a vehicle to communicate with another entity may be understood to be a V2X communication technology.

That the environment of the first vehicle includes the second vehicle may be understood to mean that the second vehicle is within the environment of the second vehicle (e.g. the first vehicle is nearby the second vehicle); and that the first vehicle sensor information at least partially represents the driving behavior of the second vehicle may be understood to mean that the first vehicle sensor information represents one or more events or changes that were caused by the driving behavior of the second vehicle and that were detected by one or more sensors of the first vehicle. For example, the second vehicle may be positioned in front of the first vehicle and the first vehicle may drive in the same direction as the second vehicle; in this example, the second vehicle may be within an environment monitored by one or more front sensors of the one or more sensors of the first vehicle monitoring at least a part of the environment of the first vehicle which is in front of the first vehicle such that the driving behavior of the second vehicle may cause an event or change in this environment of the first vehicle that is detectable by one or more sensors of the one or more front sensors of the first vehicle.

The driving behavior of the second vehicle may be understood to be at least partially determined by one or more of the following driving features of the second vehicle: (i) acceleration and/or deceleration of the second vehicle, or (ii) speed of the second vehicle, or (iii) driving direction of the second vehicle, or (iv) change of the driving direction of the second vehicle. When the second vehicle is in the environment of the first vehicle, these driving features may cause one or more events or changes in the environment of the first vehicle that are detectable by one or more sensors of the one or more sensors of the first vehicle monitoring at least a part of the environment of the first vehicle so that these driving features may a least partially be derived from the first vehicle sensor information. For example, (i) acceleration and/or deceleration of the second vehicle and (ii) speed of the second vehicle and (iv) driving direction of the second vehicle and (iv) change of the driving direction of the second vehicle may cause a change of (i) distance between the first vehicle and the second vehicle that is for example detectable by a distance sensor and/or (ii) position of the first vehicle relative to the second vehicle that is for example detectable by an imaging sensor.

An unusual driving behavior may be associated with an increased risk for occurrence of an accident. For example, such an unusual driving behavior may be characterized by the following driving features: sudden change of driving direction (e.g. lane deviations), or sharp acceleration or deceleration (e.g. without clear obstacles) or failure to respond to expected environmental cues (e.g. not stopping at red lights or crosswalks or exceeding the speed limit) or falling below the safety distance to other vehicles. In particular, an usual driving behavior may be characterized by frequent and/or repeated occurrence of these driving features. If a human driver recognizes such an unusual driving behavior of another vehicle the natural reaction of the human driver will likely be to increase the safety distance to reduce the risk associated with the unusual driving behavior of the other vehicle and to carefully observe the driving behavior of the other car to take further actions (e.g. alerting other drivers or emergency services.

For example, the machine learning model used to analyze the first vehicle sensor information is a neural network trained based on historical vehicle sensor information representing driving behavior of vehicles to evaluate a driving behavior of a vehicle represented by vehicle sensor information. To this end, the machine learning model may (i) receive the vehicle sensor information (e.g. the first vehicle sensor information) as input and (ii) process the received vehicle sensor information (e.g. the first vehicle sensor information) to evaluate the driving behavior of the vehicle (e.g. the second vehicle) represented by the vehicle sensor information (e.g. the first vehicle sensor information) and (iii) provide a result of the evaluation as output. For example, the result of the evaluation outputted by the machine learning model may at least one of (a) identify the driving behavior of the vehicle (e.g. the second vehicle) represented by the vehicle sensor information (e.g. the first vehicle sensor information) as unusual driving behavior or (b) provide an output (e.g. a classification of or a risk score for the driving behavior of the vehicle (e.g. the second vehicle) represented by the vehicle sensor information (e.g. the first vehicle sensor information)) which can be used to determine whether the driving behavior of the vehicle (e.g. the second vehicle) represented by the vehicle sensor information (e.g. the first vehicle sensor information and, optionally, further vehicle sensor information) is unusual or (c) provide an action to minimize a risk associated with the unusual driving behavior of the vehicle (e.g. the second vehicle). It is to be understood that the invention is not limited to this example.

The machine learning model may be configured to analyze the first vehicle sensor information in real-time or close to real-time. Therein, real-time or close to real-time may be understood to mean that the machine learning model processes the received vehicle sensor information (e.g. the first vehicle sensor information) to evaluate the driving behavior of the vehicle (e.g. the second vehicle) represented by the vehicle sensor information (e.g. the first vehicle sensor information) in less than 10 ms (preferably less than 5 ms or even more preferable less than 2 ms) so that a result of the evaluation is provided as output in less than 10 ms (preferably less than 5 ms or even more preferable less than 2 ms) after the first vehicle sensor information is received as input.

An action to minimize a risk associated with an unusual driving behavior may be any action which reduces the risk associated with the identified unusual driving behavior like at least one of (i) outputting an alert information to a driver of the first vehicle and, optionally, to driver(s) of further vehicle(s) that the driving behavior of said second vehicle has been identified as unusual or (ii) adapting a configuration of at least one of (a) an active protection system of said first vehicle or (b) an advanced driver assistance system of said first vehicle or (c) an automated driving system of said first vehicle. For example, a set of actions to minimize a risk associated with an unusual driving behavior may be predefined.

Determining the action to minimize a risk associated with an unusual driving behavior of the second vehicle in response to identifying the unusual driving behavior of the second vehicle may be understood to mean that the action to minimize a risk associated with the unusual driving behavior of the second vehicle is determined if the driving behavior of the second vehicle has been identified as unusual.

For example, determining the action to minimize a risk associated with an unusual driving behavior of the second vehicle in response to identifying the unusual driving behavior of the second vehicle may comprise (i) selecting the action (e.g. one or more actions) from a predefined set of actions to minimize a risk associated with an unusual driving behavior and (ii) adapting the selected action(s) to the unusual driving behavior of the second vehicle.

For example, the action to minimize a risk associated with an unusual driving behavior may be determined based on at least one of (i) the analyzing of first vehicle sensor information by means of the machine learning model (e.g. based on an output provided by the machine learning model such as a classification of or a risk score for the driving behavior of the second vehicle) or (ii) the first vehicle sensor information and, optionally, further vehicle sensor information.

The determining may be performed according to predefined rules (e.g. a predefined algorithm). To this end, the rules may for example define which action of a set of predefined actions to minimize a risk associated with an unusual driving behavior shall be determined under which conditions in response to identifying an unusual driving behavior. For example, the rules may define that, in any case, an alert information that an unusual driving behavior has been identified shall be outputted and that, in severe cases (e.g.. if additional requirements are met), additional actions like adapting a configuration of at least one of (i) an active protection system of said first vehicle and, optionally, further vehicles or (ii) an advanced driver assistance system of said first vehicle and, optionally, further vehicles or (iii) an automated driving system of the first vehicle and, optionally, further vehicles, shall be performed. For example, an unusual driving behavior may be defined to be a severe case if at least one of the following additional requirements is met: (i) risk score for the unusual driving behavior is above a predefined high risk score threshold, or classification of the unusual driving behavior corresponds to predefined classes of unusual driving behavior associated with a high risk like (a) skidding driving behavior or (b) drifting driving behavior or (c) uncontrolled driving behavior or (d) highly dangerous driving behavior (e.g. completely inadequate safety distance), or (iii) one or more driving features derivable from the first vehicle sensor information and, optionally, further vehicle sensor information are associated with a high risk like (a) absolute value of the speed of the second vehicle exceeds a predefined high risk speed threshold or (b) absolute value of the deceleration of the second vehicle exceeds a predefined high risk deceleration threshold or (c) absolute value of the acceleration of the second vehicle exceeds a predefined high risk acceleration threshold or (d) absolute value of the distance of the second vehicle to the first vehicle or any further vehicle falls below a high risk safety distance threshold. It is to be understood that the invention is not limited to these examples.

Alternatively or additionally, the determining may for example be performed by the machine learning algorithm. In this example, the machine learning algorithm may for example provide the action to minimize a risk associated with the unusual driving behavior of the second vehicle as an output of the evaluation.

According to a further exemplary aspect of the invention, an apparatus is disclosed, wherein the apparatus comprises means configured to perform the disclosed method alone or in cooperation with one or more further apparatuses.

The disclosed apparatus may serve for recognizing a driving behavior of a second vehicle, in particular for recognizing a driving behavior of the second vehicle.

The disclosed apparatus may comprise a single means for all functions, a common plurality of means for all functions, or a plurality of different means for different functions.

The means of the disclosed apparatus may be implemented in hardware and/or software. They may comprise a processor for executing computer program code for realizing the required functions, a memory storing the computer program code, or both. Accordingly, the disclosed apparatus may comprise at least one processor and at least one memory containing computer program code (e.g. the computer program code disclosed below), the at least one memory and the computer program code with the at least one processor configured to cause the respective apparatus at least to perform the respective method.

Alternatively or additionally, the means of the disclosed apparatuses may comprise circuitry that is designed to realize the required functions, for example implemented in a chipset or a chip, like an integrated circuit.

The disclosed apparatus may be (i) the first vehicle or (ii) a vehicle unit of the first vehicle or (iii) a remote device, in particular a server or a traffic infrastructure device.

According to a further exemplary aspect of the invention, a computer program code is disclosed, wherein the computer program code when executed by a processor causes an apparatus to perform the disclosed method alone or in cooperation with one or more further apparatuses.

The disclosed computer program may serve for recognizing a driving behavior of a second vehicle, in particular for recognizing a driving behavior of the second vehicle.

According to a further exemplary aspect of the invention, a non-transitory computer readable storage medium is disclosed, in which computer program code is stored, wherein the computer program code causes an apparatus to perform the disclosed method when executed by a processor. The computer program code could be stored in the respective computer readable storage medium in the form of instructions encoding the respective computer-readable storage medium.

The disclosed computer readable storage medium may be intended for taking part in the operation of a device (e.g. a vehicle device, an infrastructure device or a server), like an internal or external hard memory (e.g. a Read-(e.g., Only) Memory (ROM) or hard disk) of a computer, or be intended for distribution of the computer program code, like an optical disc.

According to a further exemplary aspect of the invention, a system is disclosed, wherein the system comprises at least two apparatuses, wherein the apparatuses are configured to cooperate to perform the disclosed method. Considering the example that the system comprises two apparatuses, this may be understood to mean that one apparatus of these two apparatuses is configured to perform some steps of the disclosed method and that the other apparatus of these two apparatuses is configured to perform the other steps of the disclosed method. It is however to be understood that the invention is not limited to this example.

The disclosed system may serve for recognizing a driving behavior of a second vehicle, in particular for recognizing a driving behavior of the second vehicle.

For example, the at least two apparatuses comprise (i) the first vehicle or a vehicle unit of the first vehicle and (ii) a remote device, in particular a server or a traffic infrastructure device.

The exemplary aspects of the invention may in particular have the advantage that an unusual driving behavior of the second vehicle can be identified and that an action to minimize a risk associated with the unusual driving behavior can be determined in response to identifying the unusual driving behavior even in situations where the second vehicle is not equipped with an advanced driving assistance system or where the advanced driving assistance system of the second vehicle does not perform an action to minimize the risk.

A further advantage of the exemplary aspects of the invention may be that the unusual driving behavior of the second vehicle can be autonomously identified based on the first vehicle sensor information.

In the following, further exemplary embodiments of the exemplary aspects of the invention will be described.

According to an embodiment of any of the exemplary aspects, the first vehicle sensor information is or includes sensor information captured by one or more sensors of the first vehicle monitoring at least one or more parts of the environment of the first vehicle. For example, the first vehicle sensor information (e.g. qualitatively or quantitatively) represents one or more events or changes in an environment of these sensors (i.e. the environment of the first vehicle) detected by these sensors at a capture time or over a capture period.

According to an embodiment of any of the exemplary aspects, the first vehicle sensor information is at least partially captured by one or more of the following sensors:
- a distance sensor, in particular a Light Detection and Ranging, LiDAR, sensor or a radar sensor or an ultrasonic sensor, or
- an imaging sensor, in particular a camera sensor, or
- a motion sensor, in particular a speed sensor or an accelerometer, or
- a positioning sensor.

A distance sensor of the first vehicle is for example configured to transmit a signal and to measure the roundtrip-time until the signal returns to the sensor (i.e. until the signal is detected by the sensor) because it is reflected by an object (e.g. the second vehicle) in the environment of the first vehicle. Based on the roundtrip-time and the propagation speed of the signal, the distance between the first vehicle and an object reflecting the signal can be determined and corresponding distance sensor information, for example representing the distance between the first vehicle and the object (e.g. the second vehicle). Examples for such distance sensors are a Light Detection and Ranging, LiDAR, sensor or a radar sensor or an ultrasonic sensor.

An imaging sensor of the first vehicle is for example configured to detect light (e.g. visible light or near infrared light) which is detectable at the first vehicle and to form an image representing at least a part of the environment of the first vehicle based on the detected light. Examples of an imaging sensor is a camera sensor like a charge-coupled device (CCD) sensor or an active-pixel sensor (APS).

A motion sensor of the first vehicle is for example configured to detect an event or change of a physical quantity that is indicative of a motion of the first vehicle and to provide corresponding motion sensor information, for example representing at least one of (i) speed or (ii) deceleration or (iii) acceleration of the first vehicle. Examples of a motion sensor are a speed sensor or an accelerometer (e.g. an capacitive accelerometer or a thermal accelerometer) . For example, a speed sensor of the first vehicle may be configured to detect the rotation speed of a wheel of the first vehicle and to determine the speed of the first vehicle based thereon; an capacitive accelerometer of the first vehicle may be configured to detect the change of the capacitance between one or more fixed beams and one or more cantilever beams when it experiences acceleration or deceleration and to determine the acceleration or deceleration of the first vehicle based thereon.

A positioning sensor of the first vehicle is for example configured to capture a position of the first vehicle and to provide corresponding position information, for example representing the (e.g. current) position of the first vehicle for example in form of geographic coordinates like longitude and latitude or coordinates of a Global Navigation Satellite System (GNSS). An example of a positioning sensor is a GNSS sensor. The positioning sensor is for example configured to capture the position of the first vehicle frequently (e.g. periodically).

As disclosed above, the driving behavior of the second vehicle may be understood to be at least partially determined by one or more of the following driving features of the second vehicle: (i) acceleration and/or deceleration of the second vehicle, or (ii) speed of the second vehicle, or (iii) driving direction of the second vehicle, or (iv) change of the driving direction of the second vehicle. For example, (i) acceleration and/or deceleration of the second vehicle and (ii) speed of the second vehicle and (iv) driving direction of the second vehicle and (iv) change of the driving direction of the second vehicle may cause a change of (i) distance between the first vehicle and the second vehicle that is for example detectable by a distance sensor and/or (ii) position of the first vehicle relative to the second vehicle that is for example detectable by an imaging sensor. Moreover, motion features like speed or deceleration or acceleration of the second vehicle can for example be determined based on the motion sensor information representing speed or deceleration or acceleration of the first vehicle and distance sensor information representing the distance between the first vehicle and the second vehicle. Thus, using at least one of a distance sensor or an imaging sensor or a motion sensor for capturing the first vehicle sensor information is advantageous to provide first vehicle sensor information representing the driving behavior of the second vehicle.

It is to be understood that the sensor types described above are only non-limiting examples.

According to an embodiment of any of the exemplary aspects, the analyzing the first vehicle sensor information by means of a machine learning model comprises:
- processing, by a first layer of the machine learning model, the first vehicle sensor information to detect one or more anomalies in the first vehicle sensor information.

For example, the first layer of the machine learning model receives the first vehicle sensor information as input and provides one or more anomalies in the first vehicle sensor information as output.

For example, the first layer of the machine learning model is based on one or more baseline models which have been at least partially trained (e.g. by a machine learning algorithm) based on a collection of historical vehicle sensor information representing usual driving behaviors of vehicles. For example, different base line models may be trained for different driving environments like at least one of (i) different road types (e.g. highway driving, city driving, country road driving) or (ii) different weather conditions (e.g. driving in good weather conditions or driving in bad weather conditions) or (iii) different traffic conditions (e.g. driving in dense traffic or driving in a traffic jam or driving in light traffic).

Considering the example that there are different baseline models, the first layer of the machine learning model may for example process the first vehicle sensor information based on the baseline model that has been trained for the driving environment which matches the current driving environment of the first vehicle best. In this example, the best matching driving environment may be selected based on additional information like position information representing a current position of the first vehicle which can be used to determine the driving environment (e.g. by querying a map service, a weather service and a traffic service) at the current position of the first vehicle before the first layer of the machine learning model processes the first vehicle sensor information.

Alternatively, the first layer of the machine learning model may for example process the first vehicle sensor information based on all baseline models. In this example, the first layer of the machine learning model may for example additionally receive information representing the driving environment at a current position of the first vehicle like at least one of (i) different road types (e.g. highway driving, city road driving, country road driving) or (ii) different weather conditions (e.g. driving in good weather conditions or driving in bad weather conditions) or (iii) different traffic conditions (e.g. driving in dense traffic or driving in a traffic jam or driving in light traffic) so that the first layer of the machine learning model can take the driving environment into account when processing the first vehicle sensor information.

Each anomaly in the driving behavior of the second vehicle may represent a deviation of the first vehicle sensor information from the baseline model(s).

Examples of driving behavior of the second vehicle that should be detected as anomalies are sudden change of driving direction (e.g. lane deviations or swerving), or sharp acceleration or deceleration (e.g. without clear obstacles), or failure to respond to expected environmental cues (e.g. not stopping at red lights or crosswalks or exceeding the speed limit), or falling below the safety distance to other vehicles.

In exemplary embodiments, the detection of one or more anomalies in the first vehicle sensor information by the first layer of the machine learning model may be considered to mean that the driving behavior of the second vehicle is to be determined to be unusual.

However, in other exemplary embodiments, the detection of one or more anomalies in the first vehicle sensor information by the first layer of the machine learning model may not necessarily mean that the driving behavior of the second is to be determined to be unusual, for example because the first layer of the machine learning model may not consider (e.g. available) environmental and/or contextual factors. Therefore, the analyzing the first vehicle sensor information by means of a machine learning model may further comprise:
- evaluating, by a second layer of the machine learning model, the one or more anomalies in the first vehicle sensor information detected by the first layer of the machine learning model.

For example, the second layer of the machine learning model receives the one or more anomalies in the first vehicle sensor information detected by the first layer of the machine learning model as input and provides a result of the evaluation as output. The result of the evaluation provided as output by the second layer of the machine learning model may at least one of (i) identify the driving behavior of the second vehicle represented by the first vehicle sensor information as unusual driving behavior or (ii) provide an output (e.g. a risk score for or classification of the driving behavior of the second vehicle represented by the first vehicle sensor information) which can be used to determine whether the driving behavior of the second vehicle represented by the first vehicle sensor information is unusual or (iii) provide the action to minimize a risk associated with the unusual driving behavior of the second vehicle.

For example, the evaluation by the second layer of the machine learning model serves for assessing the risk associated with the one or more anomalies in the first vehicle sensor information detected by the first layer of the machine learning model based on additionally types of information relating to environmental and/or contextual factors. To this end, the second layer of the machine learning model may use at least one of the following types of information for evaluating the one or more anomalies in the first vehicle sensor information detected by the first layer of the machine learning model:
- position information representing a current position of the first vehicle; or
- map information; or
- time information; or
- traffic information; or
- weather information; or
- frequency of the one or more anomalies in the first vehicle sensor information detected by the first layer of the machine learning model; or
- duration of the one or more anomalies in the first vehicle sensor information detected by the first layer of the machine learning model; or
- severity of the one or more anomalies in the first vehicle sensor information detected by the first layer of the machine learning model.

It is to be understood that the evaluation by the second layer of the machine learning model may use one or more of these types of information.

The position information representing the current position of the first vehicle may be obtained, for example captured by a position sensor of the first vehicle or received from the first vehicle. The map information may be obtained, for example by querying a map service or by determining the map information based on the current position of the first vehicle (e.g. by selecting map information representing a map of an area including the current position of the first vehicle); the traffic information may be obtained, for example by querying a traffic service or by determining the traffic information based on the first vehicle sensor information (e.g. including sensor information captured by a camera sensor); the weather information may be obtained, for example by querying a weather service or by determining the weather information based on the first vehicle sensor information (e.g. including sensor information captured by a rain sensor).

The position information represents the current position of the first vehicle for example in form of geographic coordinates like longitude and latitude or coordinates of a Global Navigation Satellite System (GNSS). For example, the position information represents a position of the first vehicle captured by a positioning sensor (e.g. a GNSS sensor) of the first vehicle. Therein, the positioning sensor is for example configured to capture the position of the first vehicle frequently (e.g. periodically). Accordingly, the positioning information may be understood to represent the current position of the first vehicle may be understood to mean that the positioning information corresponds to the latest available positioning information (e.g. representing the latest position of the first vehicle captured by the positioning sensor of the first vehicle).

Map information for example represents at least one of (i) a road map of the road network at the current position of the first vehicle (e.g. as represented by the position information) or (ii) a topographic map of the geographic area at the current position of the first vehicle (e.g. as represented by the position information).. For example, the road type (e.g. highway, city road or country road) and/or the topography (e.g. rising terrain, sloping terrain or flat terrain) and/or the area (e.g. school zone area, city area, rural area, nightlife area or area with increased number of accidents) of the road on which the first vehicle and the second vehicle are currently travelling can be determined based on the map information. Such map information may be helpful for evaluating the one or more anomalies in the first vehicle sensor information. For example, anomalies occurring on certain road type and/or in a certain topography and/or in a certain area may may be assessed to be associated with a higher risk than on other road types and/or in other topographies and/or in other area. To name a few non-limiting examples, swerving on a straight highway may be assessed to be associated with a higher risk than on a narrow mountain road; and speed inconsistencies on a city road near a school zone area may also be assessed to be associated with a higher risk than speed inconsistencies on a highway.

Time information for example represents the current time of day at the current position of the first vehicle (e.g. as represented by the position information). Such time information may be helpful for evaluating the one or more anomalies in the first vehicle sensor information. For example, anomalies occurring at night may be assessed to be associated with a higher risk than during the day.

Traffic information for example represents traffic conditions (e.g. traffic jam, dense traffic or light traffic ) at the current position of the first vehicle (e.g. as represented by the position information). Such traffic information may be helpful for evaluating the one or more anomalies in the first vehicle sensor information. For example, anomalies occurring in dense traffic may be assessed to be associated with a higher risk than in light traffic.

Weather information for example represent weather conditions at the current position of the first vehicle (e.g. as represented by the position information). Such weather information may be helpful for evaluating the one or more anomalies in the first vehicle sensor information. For example, anomalies may be assessed differently depending on the weather conditions. So minor swerving may be considered to be a usual driving behavior when the second vehicle experiences heavy crosswinds so that it is assessed to be not associated with a higher risk.

Also, the frequency and/or the duration and/or the severity of the one or more anomalies in the first vehicle sensor information may be helpful for evaluating the one or more anomalies in the first vehicle sensor information. For example, anomalies representing major deviations (e.g. complete lane loss) may assessed to be associated with a higher risk than anomalies representing a minor deviation (e.g. minor speed inconsistencies); anomalies occurring frequently in a short duration (e.g. repeated swerving over 10 s) may be associated with a higher risk than anomalies occurring less frequently (e.g. a one-time swerve).

As disclosed above, the evaluation by the second layer of the machine learning model may serve for assessing the risk associated with the one or more anomalies in the first vehicle sensor information detected by the first layer of the machine learning model based on additionally types of information relating to environmental and/or contextual factors. Depending on the risk assessment, the result of the evaluation provided as output by the second layer of the machine learning model may for example identify the driving behavior of the second vehicle represented by the first vehicle sensor information as usual driving behavior or unusual driving behavior. Alternatively, the result of the evaluation provides as output by the second layer of the machine learning model may for example be a risk score for the driving behavior of the second vehicle represented by the first vehicle sensor information which represents an assessment of the risk associated with the one or more anomalies in the first vehicle sensor information.

Additionally, the analyzing the first vehicle sensor information by means of a machine learning model may further comprise:
- determining that at least one of the one or more anomalies in the first vehicle sensor information (i.e. the one or more anomalies that have been detected by the first layer of the machine learning model) represents an unusual driving behavior of the second vehicle.

For example, it may be determined based on a risk score provided as output of the evaluation by the second layer of the machine learning model whether or not the one or more anomalies in the first vehicle sensor information represent an unusual driving behavior of the second vehicle. To this end, a threshold may defined (e.g. predefined). Therein, the one or more anomalies in the first vehicle sensor information may be determined to represent an unusual driving behavior of the second vehicle if the risk score is above the threshold, and, if the risk score is below or equal to the threshold the one or more anomalies may be determined to not represent an unusual driving behavior.

According to an embodiment of any of the exemplary aspects, further vehicle sensor information is obtained, and wherein the identifying an unusual driving behavior of the second vehicle further comprises at least partially analyzing the further vehicle sensor information by means of the machine learning model.

For example, the further vehicle information is associated with the environments of one or more further vehicles. In particular, the respective environment of each of the further vehicles may include the second vehicle which may be understood to mean that the second vehicle is within the environments of the further vehicle (e.g. the further vehicles are nearby the second vehicle) such that the further vehicle sensor information at least partially represents the driving behavior of the second vehicle. In this case, the further vehicle sensor information can be at least partially analyzed by means of the machine learning model in the same manner like the first vehicle sensor information. Accordingly, the above disclosure relating to the first vehicle sensor information shall be understood to be also applicable to the further vehicle sensor information.

For example, the further vehicle sensor information is obtained from the (one or more) further vehicles. That the further vehicle sensor information is obtained from one or more further vehicles may be understood to mean that the further vehicle sensor information includes respective vehicle sensor information obtained from each of the one or more further vehicles. In case the disclosed method is at least partially performed by the first vehicle or a vehicle unit of the first vehicle, the further vehicle sensor information may be obtained by the first vehicle or the vehicle unit of the first vehicle by receiving the first vehicle sensor information from the further vehicles via a V2X-communication link; and, in case the disclosed method is at least partially performed by a remote device like a server or an traffic infrastructure device, the first vehicle sensor information may be obtained by the remote device by receiving the first vehicle sensor information via a V2X-communication link.

The one or more further vehicles may for example comprise at least one of (i) a parked vehicle which is passed by the second vehicle or (ii) a vehicle that is driving in the opposite direction as the second vehicle or (iii) a vehicle that is driving in the same direction as the second vehicle.

That the identifying an unusual driving behavior of the second vehicle further comprises at least partially analyzing the further vehicle sensor information by means of the machine learning model may be understood to mean that the machine learning model (i) receives the further vehicle sensor information, in addition to the first vehicle sensor information, as input and (ii) processes the received vehicle sensor information (i.e. the first vehicle sensor information and the further vehicle sensor information) to evaluate the driving behavior of the second vehicle and (iii) provide a result of the evaluation as output. When processing the received vehicle sensor information (i.e. the first vehicle sensor information and the further vehicle sensor information) the different positions of the first vehicle and the one or more further vehicles relative to the second vehicle may be considered to take account of the different angles and/or viewpoints.

By utilizing the further vehicle sensor information the data basis for evaluating the driving behavior of the second vehicle can be improved, e.g. by considering further vehicle sensor information representing the driving behavior of the second vehicle from a different angle and/or viewpoint than the first vehicle sensor information.

According to an embodiment of any of the exemplary aspects, the action to minimize a risk associated with the unusual driving behavior is or comprises at least one of the following actions:
- communicating or causing communicating an alert information to one or more further vehicles (e.g. any of the above disclosed further vehicles) that the driving behavior of said second vehicle has been identified as unusual; or
- outputting or causing outputting an alert information to a driver of said first vehicle that the driving behavior of said second vehicle has been identified as unusual; or
- adapting or causing adapting a configuration of at least one of (i) an active protection system of said first vehicle or (ii) an advanced driver assistance system of said first vehicle or (iii) an automated driving system of said first vehicle; or
- adapting or causing adapting a configuration of at least one of (i) an active protection system of one or more further vehicles (e.g. any of the above disclosed further vehicles) or (ii) an advanced driver assistance system of said further vehicles or (iii) an automated driving system of said further; or
- an action of said first vehicle; or
- a coordinated action of said first vehicle and one or more further vehicles (e.g. any of the above disclosed further vehicles).

An alert information that the driving behavior of the second vehicle has been identified as unusual may for example include or represent at least one of (i) the current position of the second vehicle or (ii) the current position of the first vehicle or (iii) an identification of the second vehicle or (iv) a description of the unusual driving behavior (e.g. a classification of the unusual driving behavior) or (v) a description of a risk associated with the unusual driving behavior or (vi) risk score for the unusual driving behavior of the second vehicle. Alternatively or additionally, the alert information may include recommendations for a driver, an active protection system, an advanced driver assistance system or an automated driving system of a vehicle (e.g. the first vehicle or the further vehicles) how to respond to the unusual driving behavior, for example to prepare for a collision or to avoid overtaking or to increase the safety distance or to keep at least a minimum safety distance (e.g. which is defined in the alert information) or to not exceed a maximum speed (e.g. which is defined in the alert information).

In case the disclosed method is at least partially performed by the first vehicle or a vehicle unit of the first vehicle, communicating the alert information to the further vehicles may be understood to mean that the alert information is transmitted (e.g. broadcasted) from the first vehicle or the vehicle unit of the first vehicle to the further vehicles via a V2X-communication link; and, in case the disclosed method is at least partially performed by a remote device like a server or an traffic infrastructure device, communicating the alert information to the further vehicles may be understood to mean that the alert information is transmitted (e.g. broadcasted) from the remote device to the further vehicles via a V2X-communication link. Causing communicating the alert information may be understood that another entity (e.g. which is not part of the apparatus performing the disclosed method) is caused (e.g. instructed or controlled) to communicate the alert information to the further vehicles. This is for example advantageous to enable the further vehicles to respond to the unusual driving behavior of the second vehicle, e.g. by outputting the alert information to the driver of the vehicle as disclosed below in more detail and/or by adapting a configuration of at least one of (i) an active protection system or (ii) an advanced driver assistance system or (iii) an automated driving system as disclosed below in more detail.

Outputting the alert information to a driver of a vehicle (e.g. the driver of the first vehicle or a driver of any of the further vehicles) may for example comprise at least one of outputting the alert information by means of an driver information system of the vehicle, for example by displaying the alert information on a display (e.g. on dashboard display) of the vehicle or playing the alert information back by an audio system of the vehicle. Causing outputting the alert information may be understood that another entity (e.g. which is not part of the apparatus performing the disclosed method) is caused (e.g. instructed or controlled) to output the alert information to the to the driver of the vehicle. This is for example advantageous to draw the driver's attention to the unusual driving behavior of the second vehicle and to enable the driver of the vehicle to adapt the driving style to minimize a risk associated with the unusual driving behavior of the second vehicle.

An active protection system is for example configured to prepare the vehicle for a collision to reduce the consequences of the collision. To this end, the active protection system may be configured to tightening seat belts, adjusting seat positions, raising folded headrest and closing windows before a collision. To minimize a risk associated with the unusual driving behavior, the configuration of an active protection system of a vehicle (e.g. the first vehicle or the further vehicles) may be adapted such that the active protection system prepares the vehicle for a collision (e.g. in response to receiving an alert information including or representing a recommendation to prepare for a collision). This is for example advantageous when the identified unusual driving behavior is associated with a risk of a collision, for example because the anomalies in the first vehicle sensor information are indicative of the second vehicle being out of control (e.g. the driver of the second vehicle lost control).

In the present disclosure, an advanced driver assistance system of a vehicle (e.g. the first vehicle or the further vehicles) may understood to be any advanced driver assistance system configured to support level 1 (driver assistance) or level 2 (partial driving automation) of the levels of driving automation according to SAE J3016 standard; and an automated driving system of a vehicle (e.g. the first vehicle or the further vehicles) may understood to be any automated driving system configured to support at least level 3 (conditional driving automation) of the levels of driving automation according to SAE J3016 standard. The SAE J3016 standard has been developed by SAE International and is currently available on the website of SAE International (www.sae.org). An advanced driver assistance system supporting level 1 or level 2 of the SAE J3016 standard is configured to control the vehicle motion in longitudinal direction or lateral direction or in both directions under the supervision of the driver like an adaptive cruise control system, a lane-centering system, a parking assistance system or a lane-change assistance system, whereas an automated driving system supporting at least level 3 of the SAE J3016 standard is configured to control the vehicle motion in longitudinal direction or lateral direction at least in a specific, narrowly defined use case without requiring supervision of the driver. The configuration of (i) an advanced driver assistance system of a vehicle (e.g. the first vehicle or the further vehicles) or (ii) an automated driving system of a vehicle (e.g. the first vehicle or the further vehicles) may be adapted to adapt the driving style to minimize a risk associated with the unusual driving behavior of the second vehicle (e.g. in response to receiving an alert information including or representing a recommendation for adapting the driving style). For example, the configuration of (i) an advanced driver assistance system of a vehicle (e.g. the first vehicle or the further vehicles) or (ii) an automated driving system of a vehicle (e.g. the first vehicle or the further vehicles) may be adapted to at least one of (a) increase the safety distance or (b) keep at least a minimum safety distance (e.g. which is defined in the alert information) or (c) not exceed a maximum speed (e.g. which is defined in the alert information).

An action of the first vehicle may be understood to be any action that can ben performed by the first vehicle alone. For example, the action of the first vehicle comprises at least one of (i) a warning action for warning surrounding vehicles and/or for warning the driver of the second vehicle, (ii) a shielding action for shielding the second vehicle (e.g. to the rear), (iii) a guiding action for guiding the second vehicle or (iv) a stopping action for stopping the second vehicle (v) or a combination thereof.

A coordinated action of the first vehicle and one or more further vehicles (e.g. any of the above disclosed further vehicles) may be understood to be any action that can ben performed by the first vehicle and one or more further vehicles. For example, the coordinated action comprises at least one of (i) a warning action for warning surrounding vehicles and/or for attracting the attention of a driver of the second vehicle (ii) a shielding action for shielding the second vehicle (e.g. to the rear and the sides) or (iii) a stopping action for stopping the second vehicle or (iv) a guiding action for guiding the second vehicle (v) or a combination thereof.

A warning action for warning surrounding vehicles (e.g. drivers of the surrounding vehicles) may be performed by at least one vehicle (e.g. by the first vehicle), for example by at least one of activating the hazard warning lights or the horn of the vehicle(s) performing the warning action. Likewise, a warning action for attracting the attention of a driver of the second vehicle may be performed by at least one vehicle (e.g. by the first vehicle), for example by positioning in front of the second vehicle and activating the hazard warning lights or the horn of the vehicle(s) performing the warning action in order to attract the driver's attention.

A shielding action for shielding the second vehicle may for example be performed by one or more vehicles (e.g. the first vehicle and/or one or more further vehicles). One vehicle (e.g. the first vehicle) alone may only shield the second vehicle in one direction, for example the vehicle (in the following also referred to as rear vehicle) may position behind the second vehicle to shield it to the rear. Three vehicles (e.g. the first vehicle and two further vehicles) may shield the second vehicle in three directions, for example one vehicle (rear vehicle) may position behind the second vehicle to shield it to the rear and the other two vehicles (in the following also referred to as flanking vehicles) may position at the sides of the second vehicle to shield it to the sides such that the three vehicles (i.e. one rear vehicle and two flanking vehicles) form a shielding barrier around the second vehicle. Shielding the second vehicle to the rear is for example advantageous to prevent rear-end collisions and to keep following vehicles in a safe distance; and shielding the second vehicle to the side is for example advantageous to limit its lateral movement and prevent sudden lane changes.

A stopping action for stopping the second vehicle may be performed by at least one vehicle (e.g. the first vehicle) by positioning in front of the second vehicle and reducing its speed to force the second vehicle to also reduce its speed. For example, in case the second vehicle is equipped with an adaptive cruise control system or an emergency brake system, it may reduce its speed when the vehicle performing the stopping action is positioned in front of the second vehicle and reduces its speed; and in case the second vehicle is not equipped with such a system, the second vehicle may not reduce its speed when the vehicle performing the stopping action is positioned in front of the second vehicle and reduces its speed. To avoid a collision in the latter case, the stopping action may be aborted if a reduction of the speed of the second vehicle cannot be derived from new vehicle sensor information obtained after the vehicle performing the stopping action began to reduce its speed. The vehicle performing the stopping action is in the following also referred to as stopping vehicle. This is particularly advantageous to stop the second vehicle.

A guiding action for guiding the second vehicle may be performed by at least one vehicle (e.g. the first vehicle), for example by positioning in front of the second vehicle and setting a consistent speed. For example, in case the second vehicle is equipped with an adaptive cruise control system or an emergency brake system, it may adapt its speed to the speed of the vehicle performing the guiding action; and in case the second vehicle is not equipped with such a system, the second vehicle may not adapt its speed to the speed of the vehicle performing the guiding action. To avoid a collision in the latter case, the guiding action may be aborted if an adaption of the speed of the second vehicle cannot be derived from new vehicle sensor information obtained (e.g. from a vehicle positioned behind the second vehicle) after the vehicle performing the stopping action began to reduced its speed. The vehicle performing the guiding action is in the following also referred to as guiding vehicle; it may drive to a secure area like a shoulder, an emergency lane, an emergency stop, a gas station, a resting place or any other designated stopping point. Guiding the second vehicle may allow to control its speed and trajectory.

In case of a coordinated action, a stopping action or a guiding action may for example be combined with a shielding action.

The coordinated action may for example be determined (e.g. adapted) based on capability information of the first vehicle and/or capability information of the further vehicles. The respective capability information of a respective vehicle of the first vehicle and the further vehicles may for example indicate whether or not the respective vehicle is available for a coordinated action. Additionally or alternatively, the respective capability information of a respective vehicle of the first vehicle and the further vehicles may indicate capabilities of the respective vehicle. Examples of such capability information are an indication whether or not the respective vehicle is an unmanned vehicle or transports a driver and/or passengers, an indication whether or not the respective vehicle is equipped with an advanced driver assistance system or an automated driving system which may support (e.g. perform) the coordinated action, or an indication of physical attributes of the respective vehicle (e.g. size, unloaded weight or stability), or an indication of the type of the respective vehicle (e.g. car, compact car, sport utility vehicle, delivery van or truck), or an indication of technical specifications of the respective vehicle (e.g. maximum speed, engine power, brake power, type of vehicle sensors). The coordinated action may be determined (e.g. adapted) at least partially based on this capability information.

For example, the roles of the different vehicles performing the coordinated action are assigned based on this capability information. For example, larger vehicles may be prioritized for roles requiring a position in front or at the side of the second vehicle as they can absorb more impact if necessary; and vehicles having better advanced driver assistance systems or better automated driving systems (e.g. supporting a higher level of the SAE J3016 standard) may be prioritized for roles requiring a position close to the second vehicle as they may be considered to be able to responds faster to actions of the second vehicle; and vehicles having more advanced vehicle sensors may be prioritized for roles requiring a position behind the second vehicle to be able to capture and provide new vehicle sensor information to monitor the coordinated action when it is performed.

For example, the coordinated action is negotiated between the first vehicle and the further vehicles within the vicinity of the second vehicle. This is particularly advantageous when the disclosed method is performed by the first vehicle or a vehicle unit of the first device. In this case, the first vehicle may for example initiate negotiating the coordinated action with the further vehicles by transmitting (e.g. broadcasting) a corresponding request information to the further vehicles via a V2X-communication link. The further vehicles may for example transmit the capability information to the first vehicle via a V2X-communication link in response to receiving the request information.

Alternatively, the coordinated action may be negotiated between a remote device and the first vehicle as well as the further vehicles. This is particularly advantageous when the disclosed method is performed by the remote device. In this case, the remote device may for example initiate negotiating the coordinated action with the first vehicle and the further vehicles by transmitting (e.g. broadcasting) a corresponding request information to the first vehicle and the further vehicles via V2X-communication links. The first vehicle and the further vehicles may for example transmit the capability information to the remote device via V2X-communication links in response to receiving the request information.

It is to be understood that the vehicles performing the coordinated action may communicate via V2X communication links, when performing the coordinated action, to coordinate each other and to be able to dynamically adapt the coordinated action.

According to an embodiment of any of the exemplary aspects, the method further comprises:
- at least partially performing or causing performing the action to minimize a risk associated with the unusual driving behavior.

At least partially performing the action to minimize a risk associated with the unusual driving behavior may be understood to mean that the action to minimize a risk associated with the unusual driving behavior is at least partially performed by an apparatus at least partially performing the disclosed method. For example, this apparatus may perform the action alone or in cooperation with other apparatuses.

In case the disclosed method is at least partially performed by the first vehicle and the action to minimize a risk associated with the unusual driving behavior is an action of the first vehicle that can be performed by the first vehicle alone, the first vehicle may perform the action to minimize a risk associated with the unusual driving behavior alone; and in case the disclosed method is at least partially performed by the first vehicle and the action to minimize a risk associated with the unusual driving behavior is a coordinated action, the first vehicle may perform the action to minimize a risk associated with the unusual driving behavior in cooperation with one or more further vehicles.

Causing performing the action to minimize a risk associated with the unusual driving behavior may be understood to mean that an apparatus at least partially performing the disclosed method causes one or more further apparatuses to perform the action to minimize a risk associated with the unusual driving behavior, for example by controlling (e.g. by transmitting corresponding control information) to the one or more further apparatuses.

In case the disclosed method is at least partially performed by a vehicle unit of the first vehicle or the remote device and the action to minimize a risk associated with the unusual driving behavior is an action of the first vehicle that can be performed by the first vehicle alone, the vehicle unit of the first vehicle or the remote device may control the first vehicle to perform the action to minimize a risk associated with the unusual driving behavior alone; and in case the disclosed method is at least partially performed by a vehicle unit of the first vehicle or the remote device and the action to minimize a risk associated with the unusual driving behavior is a coordinated action, the vehicle unit of the first vehicle or the remote device may control the first vehicle and one or more further vehicles to perform the action to minimize a risk associated with the unusual driving behavior in cooperation with each other.

According to an embodiment of any of the exemplary aspects, the action to minimize a risk associated with the unusual driving behavior is determined at least partially based on at least one of the following types of information:
- map information; or
- traffic information; or
- weather information.

As disclosed above, map information for example represents at least one of (i) a road map of the road network at the current position of the first vehicle (e.g. as represented by the position information) or (ii) a topographic map of the geographic area at the current position of the first vehicle (e.g. as represented by the position information). For example, the road type (e.g. highway, city road or country road) and/or the road geometry (e.g. single lane, multi lane, shoulder, emergency lane) and/or the topography (e.g. rising terrain, sloping terrain or flat terrain) of the road on which the first vehicle and the second vehicle are currently travelling as well as the distance/route from the current position of the first vehicle to a designated stopping point (e.g. an emergency stop, a gas station or a resting place) can be determined based on the map information. Such map information may be helpful for determining the action to minimize a risk associated with the unusual driving behavior. For example, if the distance to a designated stopping point is below a predefined distance threshold, a guiding action for guiding the second vehicle to this designated stopping point may be determined as action to minimize a risk associated with the unusual driving behavior; only if the road geometry allows vehicles to position at the sides of the second vehicle, a shielding action including two flanking vehicles may be determined as action to minimize a risk associated with the unusual driving behavior; if there is an upcoming obstacle (e.g. a steep descending slope and/or a sharp curves), a stopping action may be determined as action to minimize a risk associated with the unusual driving behavior in order to stop the second vehicle before the obstacle.

As disclosed above, traffic information for example represents traffic conditions (e.g. traffic jam, dense traffic or light traffic ) at the current position of the first vehicle (e.g. as represented by the position information). Such traffic information may be helpful for determining the action to minimize a risk associated with the unusual driving behavior. For example, if there is dense traffic, a shielding action including a rear vehicle and/or a warning action may be determined as action to minimize a risk associated with the unusual driving behavior in order to keep other vehicles in a safe distance and/or warn other vehicles.

As disclosed above, weather information for example represent weather conditions at the current position of the first vehicle (e.g. as represented by the position information). Such weather information may be helpful for determining the action to minimize a risk associated with the unusual driving behavior.

This embodiment is particularly advantageous to leverage additional information like map information or traffic information or weather information when determining the action to minimize a risk associated with the unusual driving behavior such that the action to minimize a risk associated with the unusual driving behavior is better adapted to the current and upcoming driving conditions.

According to an embodiment of any of the exemplary aspects, the method further comprises:
- dynamically adapting the action to minimize a risk associated with the unusual driving behavior at least partially based on at least one of the following types of information:
   - map information; or
   - traffic information; or
   - weather information; or
   - newly obtained vehicle sensor information.

Dynamically adapting the action to minimize a risk associated with the unusual driving behavior may be understood to mean that the action to minimize a risk associated with the unusual driving behavior is adapted when it is already performed by one or more vehicles. For example, the action to minimize a risk associated with the unusual driving behavior may be adapted to changes of environmental and/or contextual factors.

Such changes may for example be anticipated based on map information (e.g. changes of the road type, road geometry, topography or area) such that the action to minimize a risk associated with the unusual driving behavior can be dynamically adapted to these changes even before they occur. For example, flanking vehicles of a shielding action may increase their distance to the second vehicle before a curve to maintain stability; a shielding action including flanking vehicles may be aborted before the road geometry changes (e.g. from multi lane to single lane) so that it does not longer allow vehicles to position at the sides of the second vehicle; before descending slopes a guiding vehicle of a guiding action may reduce its speed to prevent the second vehicle from gaining excessive speed downhill, before entering a safety area (e.g. a school zone area or a traffic-calmed area) a guiding action may be dynamically adapted to a stopping action in order to prevent the second vehicle from entering this safety area.

Likewise, the action to minimize a risk associated with the unusual driving behavior can be dynamically adapted to changed traffic conditions represented by traffic information and/or changed weather conditions represented by weather information.

Newly obtained vehicle sensor information may be understood to be new vehicle sensor information captured and obtained when the action to minimize a risk associated with the unusual driving behavior is performed. As disclosed above, such new vehicle sensor information may for example be captured and provided by a vehicle positioned behind the second vehicle. Based on this newly obtained vehicle sensor information, the action to minimize a risk associated with the unusual driving behavior can be dynamically adapted. For example, a guiding action or a stopping action may be aborted if an adaption of the speed of the second vehicle to the speed of the stopping vehicle or guiding vehicle cannot be derived from the newly obtained vehicle sensor information as disclosed in more detail above.

This embodiment is thus particularly advantageous to leverage additional information like map information or traffic information or weather information or newly obtained vehicle sensor information to dynamically adapted the action to minimize a risk associated with the unusual driving behavior, for example when the driving conditions change.

According to an embodiment of any of the exemplary aspects, the method is performed by at least one of (i) the first vehicle or (ii) a vehicle unit of the first vehicle or (iii) a remote device, in particular a server or a traffic infrastructure device.

The features and embodiments described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic depiction of a road situation comprising a first vehicle and a second vehicle,
- Fig. 2: a block diagram of an exemplary embodiment of an apparatus 200 according to an exemplary aspect of the invention,
- Fig. 3: a block diagram of an exemplary embodiment of an apparatus according to an exemplary aspect of the invention,
- Fig. 4: a flow chart illustrating an exemplary embodiment of a method according to an exemplary aspect of the invention,
- Fig. 5: a block diagram of an exemplary embodiment of a machine learning model for analyzing vehicle sensor information.

### DETAILED DESCRIPTION OF THE FIGURES

The following description serves to deepen the understanding of the present invention and shall be understood to complement and be read together with the description of example embodiments of the invention as provided in the above SUMMARY section of this specification.

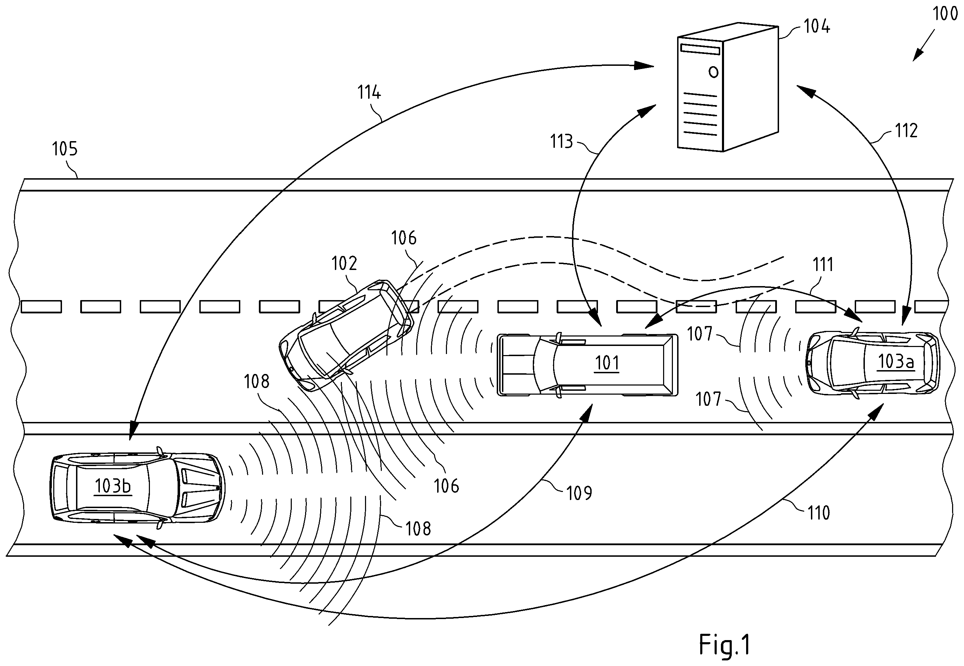

Fig. 1 is a schematic depiction of a road situation 100 comprising a first vehicle 101 and a second vehicle 102 as well as further vehicles 103a and 103b. Moreover, remote device 104 is depicted in Fig. 1. Based on road situation 100, exemplary embodiments of exemplary aspects of the invention are described in the following.

Each of vehicles 101, 102, 103a and 103b is a motor vehicle. For exemplary purposes, first vehicle 101 is depicted as a delivery van in Fig. 1, and vehicles 102, 103a and 103b are depicted as cars, and remote device 104 is depicted as server in Fig. 1. In this regard, it is noted that remote device 104 is not limited to a single server, but may also be realized by a plurality of servers (e.g. forming a server cloud.

In road situation 100, the vehicles 101, 102, 103a and 103b are driving on a multi-lane road 105, wherein vehicles 101, 102 and 103a are driving in the same direction and further vehicle 103b is driving in the opposite direction.

In Fig. 1, an (e.g. uncontrolled) swerving of second vehicle 102 is indicated by dashed lines for exemplary purposes.

First vehicle 101 comprises front sensors configured for continually monitoring an environment 106 in front of the first vehicle; and further vehicle 103a comprises front sensors configured for continually monitoring an environment 107 in front of the further vehicle 103a; and further vehicle 103b comprises front sensors configured for continually monitoring an environment 108 in front of the further vehicle 103b. An example of such a front sensor is a distance sensor, in particular a Light Detection and Ranging, LiDAR, sensor or a radar sensor, or an imaging sensor, in particular a camera sensor.

As depicted in Fig. 1, the environments 106 and 108, which are continually monitored by front sensors of first vehicle 101 and further vehicle 103b, respectively, include the second vehicle 102. Accordingly, sensor information continually captured by the front sensors of first vehicle 101 and further vehicle 103b are understood to be associated with the environment of first vehicle 101 and further vehicle 103b, respectively, and, as long as second vehicle is within environments 106 and 108 as depicted in Fig. 1, to represent the driving behavior of second vehicle 102 (e.g. the (e.g. uncontrolled) swerving as indicated by the dashed lines) by representing one or more events or changes in environments 106 and 108 that were caused by the driving behavior of second vehicle 102 and that were detected by the front sensors of first vehicle 101 and further vehicle 103b, respectively.

Vehicles 101, 103a and 103b may communicate with each other via communication links 109, 110 and 111 and with remote device 104 via communication links 112, 113 and 114.

Communication links 109, 110 and 111 are wireless communication links, and communication links 112, 113 and 114 are at least partially wireless communication links, i.e. they include wireless segments, but may also include wired segments.

Communication links 109 to 114 may be V2X communication links. As disclosed above, V2X (vehicle-to-everything) relates to a wireless communication technology enabling a wireless communication between a vehicle and any entity (e.g. another vehicle or a remote device) that may affect, or may be affected by, the vehicle. Example standards for V2X communication are (i) IEEE 802.11p specified by the IEEE (Institute of Electrical and Electronics Engineers) and (ii) cellular V2X (C-V2x) specified by the 3GPP (3rd Generation Partnership Project) as part of the 4G and 5G specifications. It is to be understood that the invention is not limited to these example standards. According to the present disclosure, any wireless communication technology enabling a vehicle to communicate with another entity may be understood to be a V2X communication technology.

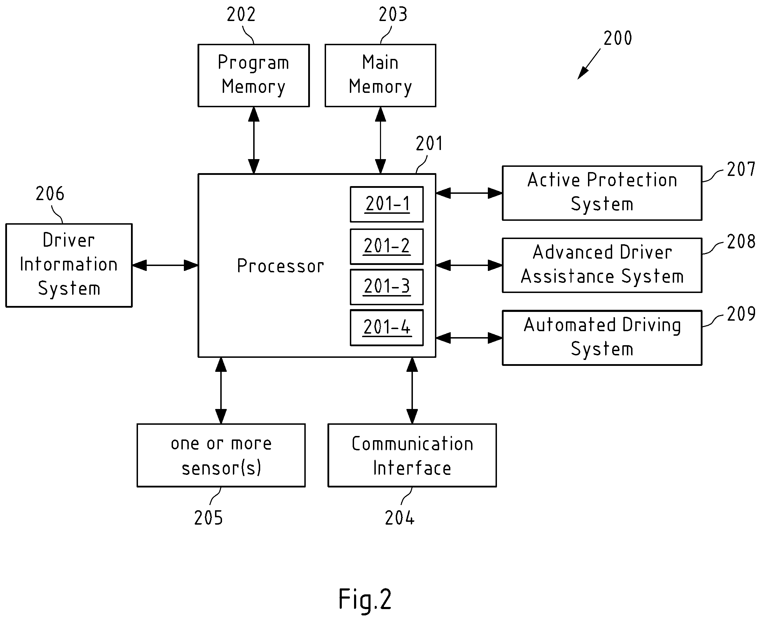

Fig. 2 is a block diagram of an exemplary embodiment of an apparatus 200 according to the invention. The apparatus 200 is a vehicle or a vehicle unit of a vehicle. In the following, it is assumed for exemplary purposes that apparatus 200 corresponds to first vehicle 101 or a vehicle unit of first vehicle 101 of Fig. 1. It is however to be understood that apparatus 200 can also correspond to further vehicles 103a and 103b or vehicle units of further vehicles 103a and 103b.

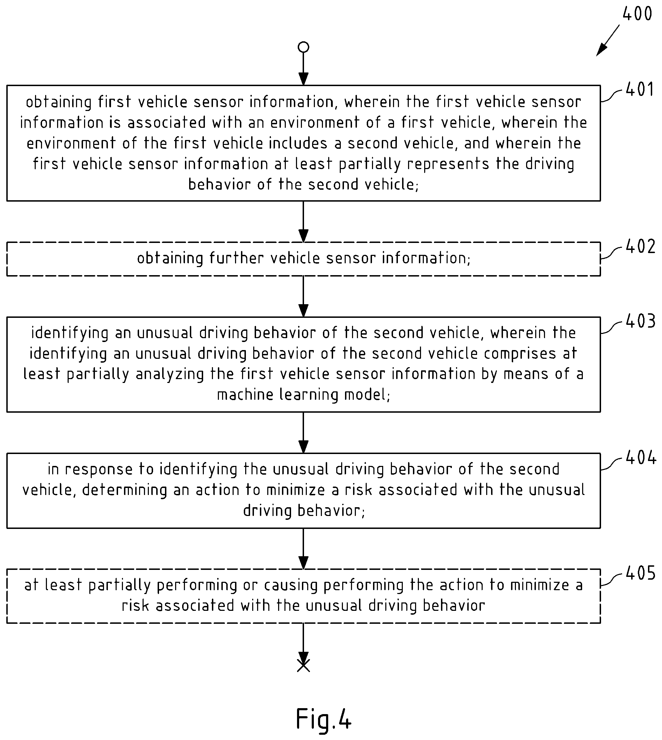

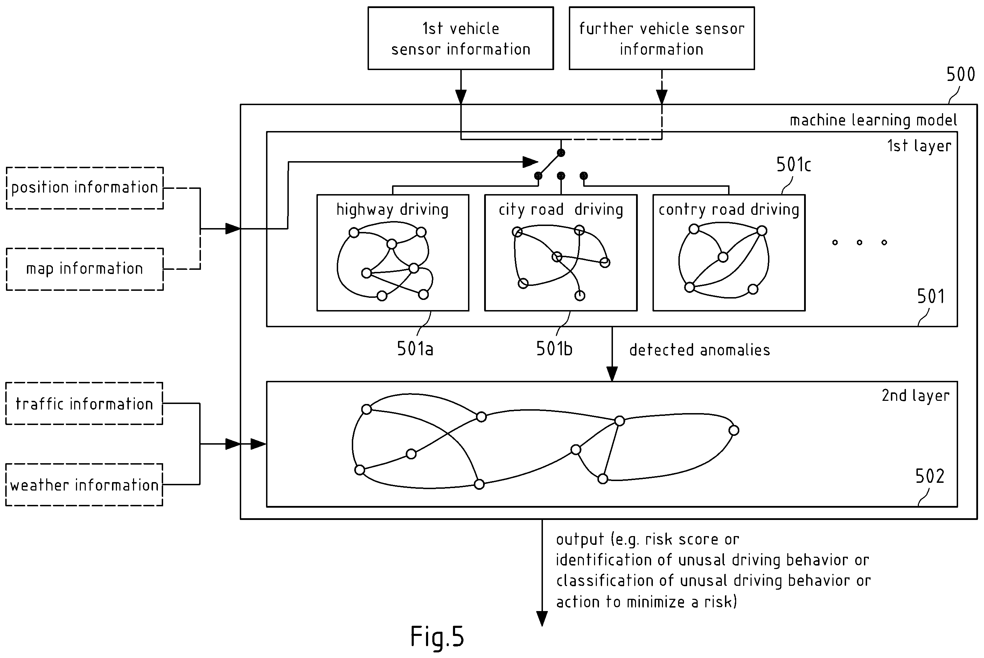

Apparatus 200 comprises a processor 201. Processor 201 may represent a single processor or two or more processors, which are for example at least partially coupled, for example via a bus. Processor 201 executes a computer program code stored in program memory 202 (e.g. computer program code causing apparatus to perform the method according to an exemplary aspect of the invention (e.g. the steps of the method according to an exemplary aspect of the invention as the steps of flowchart 400 of Fig. 4)), and interfaces with a main Memory 203. Program Memory 202 may also contain an operating system for Processor 201 and capability information and map information representing a road map including the multi-lane road 105 of Fig. 1 and a machine learning model (e.g. machine learning model 500 of Fig. 5 ). Some or all of memories 202 and 203 may also be included into Processor 201. One of or both of memories 202 and 203 may be fixedly connected to Processor 201 or at least partially removable from Processor 201, for example in the form of a memory card or stick.

A program memory (e.g. program Memory 202) may for example be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable, for instance in the form of a removable SD memory card.

A main memory (e.g. main Memory 203) may for example be a volatile memory. It may for example be a DRAM memory, to give non-limiting example. It may for instance be used as a working memory for a processor (e.g. Processor 201) when executing an operating system and/or programs.

The apparatus 200 may further comprise the following functional units: vehicle sensor information obtainer 201-1 (e.g. corresponding to method steps 401 and 402 of Fig. 4), a unusual driving behavior identifier 201-2 (e.g. corresponding to method step 403 of Fig. 4), an action determiner 201-3 (e.g. corresponding to method step 404 of Fig. 4), an action performer or causer 201-4 (e.g. corresponding to method step 405 of Fig. 4). A functional unit may for instance correspond to a computer program code block stored in program memory 202 which is executed by processor 201.

Processor 201 (e.g. one or more of the functional units) further controls a communication interface 204 configured for receiving and transmitting information via a communication link. A communication interface may be or may comprise a receiver circuit and/or a transmitter circuit and/or a transceiver circuit. Such circuits may comprise modulators, filters, mixers, switches and/or one or more antennas to allow transmission and/or reception of information in the form of signals.

In case apparatus 200 is (i) first vehicle 101 or (ii) a vehicle unit of the first vehicle 101, communication interface 204 is for example configured for receiving and transmitting information (e.g. vehicle sensor information) via wireless communication links 109, 111 and 113; and, in case apparatus 200 is (iii) remote device 104, communication interface 204 is for example configured for receiving and transmitting information (e.g. vehicle sensor information) via communication links 112, 113 and 114.

Processor 201 (e.g. one or more of functional units) controls one or more sensors 205 configured for continually capturing first vehicle sensor information. The captured first vehicle sensor information is provided to Processor 201. In the following it is assumed for exemplary purposes that the front sensors of first vehicle 101 monitoring environment 106 in front of first vehicle 101 are part of or are sensors 205. Accordingly, the first vehicle sensor information is or includes sensor information captured by these front sensors which represent the driving behavior of second vehicle 102 as disclosed above. As disclosed above, an example of such a front sensor is a distance sensor, in particular a Light Detection and Ranging, LiDAR, sensor or a radar sensor, or an imaging sensor, in particular a camera sensor. Additionally, the sensors 205 may comprise a motion sensor configured to capture speed or acceleration or deceleration of first vehicle 101 and/or a positioning sensor configured to capture a position of first vehicle 101 such that first vehicle sensor information may additionally include motion sensor information (e.g. representing speed and/or acceleration and/or deceleration of the first vehicle) and/or position information (e.g. representing a position of first vehicle 101).

Moreover, processor 201 (e.g. one or more of functional units) controls optional driver information system 206 configured for outputting driver information to a driver of first vehicle 101. To this end, the driver information system 206 may for example comprise or control at least one of (i) a dashboard display on which driver information can be displayed and/or (ii) an audio system which can play driver information back.

Moreover, processor controls (e.g. one or more of functional units) optional active protection system 207, optional advanced driver assistance system 208 and optional automated driving system 209.

Active protection system 207 is for example configured to prepare first vehicle 101 for a collision in order to reduce the consequences of the collision. To this end, active protection system 207 may be configured to tightening seat belts, adjusting seat positions, raising folded headrests and closing windows before a collision.

Advanced driver assistance system 208 is any advanced driver assistance system configured to support level 1 (driver assistance) or level 2 (partial driving automation) of the levels of driving automation according to SAE J3016 standard; and automated driving system 209 is any automated driving system configured to support at least level 3 (conditional driving automation) of the levels of driving automation according to SAE J3016 standard. The SAE J3016 standard has been developed by SAE International and is currently available on the website of SAE International (www.sae.org). As disclosed above, an advanced driver assistance system supporting level 1 or level 2 of the SAE J3016 standard is configured to control the vehicle motion in longitudinal direction or lateral direction or in both directions under the supervision of the driver like an adaptive cruise control system, a lane-centering system, a parking assistance system or a lane-change assistance system, whereas an automated driving system supporting at least level 3 of the SAE J3016 standard is configured to control the vehicle motion in longitudinal direction or lateral direction at least in a specific, narrowly defined use case without requiring supervision of the driver. It is to be understood that first vehicle may comprise either optional advanced driver assistance system 208 or automated driving system 209.

The components 202 to 209 of apparatus 200 may for instance be connected with processor 201 by means of one or more serial and/or parallel busses.

It is to be understood that apparatus 200 may comprise various other components like a user interface for receiving user input or outputting user information.

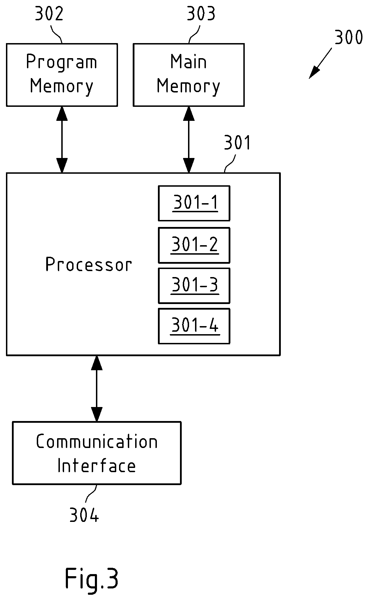

Fig. 3 is a block diagram of an exemplary embodiment of an apparatus 300 according to the invention. The apparatus 300 is a remote device. In the following, it is assumed for exemplary purposes that apparatus 300 corresponds to remote device 104 of Fig. 1.

Apparatus 300 comprises a processor 301. Processor 301 may represent a single processor or two or more processors, which are for example at least partially coupled, for example via a bus. Processor 301 executes a computer program code stored in program Memory 302 (e.g. computer program code causing apparatus to perform the method according to an exemplary aspect of the invention (e.g. the steps of the method according to an exemplary aspect of the invention as the steps of flowchart 400 of Fig. 4)), and interfaces with a main Memory 303. Program Memory 302 may also contain an operating system for Processor 301 and map information representing a road map including the multi-lane road 105 of Fig. 1 and a machine learning model (e.g. machine learning model 500 of Fig. 5 ). Some or all of memories 302 and 303 may also be included into Processor 301. One of or both of memories 302 and 303 may be fixedly connected to Processor 301 or at least partially removable from Processor 301, for example in the form of a memory card or stick.

The apparatus 300 may further comprise the following functional units: vehicle sensor information obtainer 301-1 (e.g. corresponding to method steps 401 and 402 of Fig. 4), a unusual driving behavior identifier 301-2 (e.g. corresponding to method step 403 of Fig. 4), an action determiner 301-3 (e.g. corresponding to method step 404 of Fig. 4), an action performer or causer 301-4 (e.g. corresponding to method step 405 of Fig. 4). A functional unit may for instance correspond to a computer program code block stored in program memory 302 which is executed by processor 301.

Processor 301 further controls a communication interface 304 configured for receiving and transmitting information via a communication link, for example vehicle sensor information via wireless communication links 112, 113 and 114.

The components 302 to 304 of apparatus 300 may for instance be connected with Processor 301 by means of one or more serial and/or parallel busses.

It is to be understood that apparatus 300 may comprise various other components like a user interface for receiving user input or outputting user information.

Fig. 4 is a flow chart 400 illustrating an exemplary embodiment of a method according to an exemplary aspect of the invention. Without limiting the scope of the invention, it is assumed in the following for exemplary purposes and without limiting the scope of the invention that the first vehicle 101 of Fig. 1 which corresponds to apparatus 200 of Fig. 2 performs all steps of flow chart 400. It is however to be understood that the invention is not limited to this embodiment. Alternatively, remote device 104 of Fig. 1 which corresponds to apparatus 300 of Fig. 3 may for example perform at least some steps of flow chart 400.

In a step 401, first vehicle sensor information is obtained. The first vehicle sensor information is associated with an environment of first vehicle 101. The environment of first vehicle 101 includes second vehicle 102. The first vehicle sensor information at least partially represents the driving behavior of second vehicle 102.

For example, the first vehicle sensor information is obtained successively (e.g. by successively obtaining sensor information captured by sensors 205 of vehicle 101) or at once in step 401.

In the following it is assumed for exemplary purposes and without limiting the scope of the invention that the environment of first vehicle 101, which is associated with the first vehicle sensor information, is or includes environment 106 which is continually monitored by front sensor of first vehicle 101 and that the first vehicle sensor information is or includes sensor information captured by sensors 205 of first vehicle 101 including these front sensors monitoring environment 106 over a capture period which includes road situation 100 depicted in Fig. 1. As disclosed above, environment 106 includes second vehicle 102 in road situation 100 depicted in Fig. 1. Accordingly, the first vehicle sensor information at least partially represents the driving behavior of the second vehicle.

In step 401, the first vehicle sensor information is for example successively obtained by first vehicle 101 by successively capturing the first vehicle sensor information by sensors 205 of first vehicle 101 over the capture period.

In an optional step 402, further vehicle sensor information is obtained.

In the following it is assumed for exemplary purposes and without limiting the scope of the invention that the further vehicle sensor information is obtained from further vehicles 103a and 103b and that the further vehicle sensor information is or includes sensor information successively captured by the front sensors of further vehicles 103a and 103b monitoring environment 107 and 108, respectively, over a capture period. As disclosed above, environment 108 includes second vehicle 102, whereas environment 107 does not include second vehicle. Accordingly, the further vehicle sensor information at least partially represent the driving behavior of the second vehicle.

In step 402, the further vehicle sensor information is for example obtained by first vehicle 101 at once by receiving the further vehicle sensor information by communication interface 204 via communication links 109 and 111.

In step 403, an unusual driving behavior of second vehicle 102 is identified. Identifying the unusual driving behavior of the second vehicle in step 403 comprises at least partially analyzing the first vehicle sensor information obtained in step 401 by means of a machine learning model. Additionally, identifying the unusual driving behavior of the second vehicle in step 403 may comprise at least partially analyzing the further vehicle sensor information obtained in step 402by means of the machine learning model. For example, the machine learning model may receive the first vehicle sensor information obtained in step 401 and, optionally, the further vehicle sensor information obtained in step 402 as input.

For example, the machine learning model used to analyze the first vehicle sensor information is a neural network trained based on historical vehicle sensor information representing driving behavior of vehicles to evaluate a driving behavior of a vehicle represented by vehicle sensor information.

In the following, it is assumed for exemplary purposes and without limiting the scope of the invention that the first vehicle sensor information and the further vehicle sensor information are analyzed by means of machine learning model 500 for analyzing vehicle sensor information shown in Fig. 5.

Machine learning model 500 comprises a first layer 501 and a second layer 502. The first layer 501 is configured to detect one or more anomalies in vehicle sensor information received as an input, and the second layer 502 is configured to evaluate the one or more anomalies detected by first layer 501.

First layer 501 can be based on one or more baseline models which have been at least partially trained by a machine learning algorithm (e.g. an unsupervised machine learning algorithm) based on a collection of historical vehicle sensor information representing usual driving behaviors of vehicles. For example, first layer 501 could be based on a single baseline model which has been trained for a general driving environment. Alternatively, first layer 501 could be based on different baseline models which have been trained for different driving environments like at least one of (i) different road types (e.g. highway driving, city driving, country road driving) or (ii) different weather conditions (e.g. driving in good weather conditions or driving in bad weather conditions) or (iii) different traffic conditions (e.g. driving in dense traffic or driving in a traffic jam or driving in light traffic). In the following it is assumed for exemplary purposes and without limiting the scope of the invention, that first layer 501 comprises at least three baseline models 501a, 501b and 501c as depicted in Fig. 5. These baseline models 501a, 501b and 501c have been trained for different road types, i.e. they have been trained based on different subcollections of historical vehicle sensor information representing usual driving behavior on different road types, i.e. baseline model 501a has been trained for highway driving, baseline model 501b has been trained for city road driving and baseline model 501c has been trained for country road driving. The different baseline models 501a, 501b and 501c of layer 501 could for example be represented by different neural networks as depicted in Fig. 5.

First layer 501 receives the first vehicle sensor information obtained in step 401 and, optionally, the further vehicle sensor information obtained in step 402 as input. The vehicle sensor information may for example be processed by the baseline model of baseline models 501a, 501b and 501c which matches the current driving environment of vehicle 101 best. For example, the best matching driving environment is determined based on additional position information representing the current position of first vehicle 101 and map information representing a road map of a road network including the current position of first vehicle 101 (e.g. as represented by the position information). Based on this information, the road type (e.g. city road, country road or highway) on which first vehicle 101 is currently driving can be determined and the corresponding baseline model can be selected from baseline models 501a, 501b and 501c as best matching baseline model.

The vehicle sensor information received as input are processed by the best matching baseline model of baseline models 501a, 501b and 501c to detect one or more anomalies in the driving behavior of second vehicle 102 represented by the vehicle sensor information received as input. These anomalies are then provided as output of first layer 501.

Therein, each anomaly in the driving behavior of second vehicle 102 may represent a deviation of the first vehicle sensor information from the best matching baseline model of baseline models 501a, 501b and 501. As disclosed above, examples of driving behavior of the second vehicle that should be detected as anomalies are sudden change of driving direction (e.g. lane deviations or swerving), or sharp acceleration or deceleration (e.g. without clear obstacles), or failure to respond to expected environmental cues (e.g. not stopping at red lights or crosswalks or exceeding the speed limit), or falling below the safety distance to other vehicles.

Second layer 502 receives the one or more anomalies detected by first 501 as input and provides a result of the evaluation as output. The result of the evaluation provided as output by the second layer of the machine learning model may at least one of (i) identify the driving behavior of second vehicle 102 represented by the vehicle sensor information received by first layer 501 as input as unusual driving behavior or (ii) provide an output (e.g. a risk score for or classification of the driving behavior of the second vehicle represented by the vehicle sensor information received by first layer 501 as input) which can be used to determine whether the driving behavior of the second vehicle is unusual or (iii) provide the action to minimize a risk associated with the unusual driving behavior of the second vehicle.

For example, the evaluation by second layer 502 serves for assessing the risk associated with the one or more anomalies detected by first layer 501 based on additionally types of information relating to environmental and/or contextual factors. As disclosed above, second layer 502 may use at least one of the following types of information for evaluating the one or more anomalies in the first vehicle sensor information detected by the first layer of the machine learning model:
- position information; or
- map information; or
- time information; or
- traffic information; or
- weather information; or
- frequency of the one or more anomalies detected by first layer 501; or
- duration of the one or more detected by first layer 501; or
- severity of the one or more detected by first layer 501.

It is to be understood that the evaluation by the second layer of the machine learning model may use one or more of these types of information. In the following, it is assumed for exemplary purposes that second layer use traffic information and weather information as well as frequency, duration and severity of the one or more anomalies detected by first layer 501.

Traffic information for example represents traffic conditions (e.g. traffic jam, dense traffic or light traffic ) at the current position of the first vehicle (e.g. as represented by the position information). Such traffic information may be helpful for evaluating the one or more anomalies in the first vehicle sensor information. For example, anomalies occurring in dense traffic may be assessed to be associated with a higher risk than in light traffic.

Weather information for example represent weather conditions at the current position of the first vehicle (e.g. as represented by the position information). Such weather information may be helpful for evaluating the one or more anomalies in the first vehicle sensor information. For example, anomalies may be assessed differently depending on the weather conditions. So minor swerving may be considered to be a usual driving behavior when the second vehicle experiences heavy crosswinds so that it is assessed to be not associated with a higher risk.

Also, the frequency and/or the duration and/or the severity of the one or more anomalies in the first vehicle sensor information may be helpful for evaluating the one or more anomalies in the first vehicle sensor information. For example, anomalies representing major deviations (e.g. complete lane loss) may be assessed to be associated with a higher risk than anomalies representing a minor deviation (e.g. minor speed inconsistencies); anomalies occurring frequently in a short duration (e.g. repeated swerving over 10 s) may be associated with a higher risk than anomalies occurring less frequently (e.g. a one-time swerve).

For example, second layer 502 may be represented by a neural network which has been trained by machine learning algorithm (e.g. a supervised machine learning algorithm) based on a collection of exemplary weather information (e.g. representing different weather conditions considered to occur frequently) and a collection of exemplary traffic information (e.g. representing different traffic conditions considered to occur frequently) and a collection of anomalies detected by first layer 501 for a collection of historical vehicle sensor information representing unusual driving behaviors of vehicles.

As disclosed above, second layer 502 may provide at least one of the following as output of machine learning model 500 (i) an identification of the driving behavior of second vehicle 102 represented by the vehicle sensor information received by first layer 501 as input as unusual driving behavior or (ii) an output (e.g. a risk score for or classification of the driving behavior of the second vehicle represented by the vehicle sensor information received by first layer 501 as input) which can be used to determine whether the driving behavior of the second vehicle is unusual or (iii) the action to minimize a risk associated with the unusual driving behavior of second vehicle 102.

Now turning back to step 403 of flowchart 400 of Fig. 4. In case machine learning model 500 provides an output (e.g. a risk score for or classification of the driving behavior of second vehicle 102 represented by the vehicle sensor information received by first layer 501 as input) which can be used to determine whether the driving behavior of second vehicle 102 is unusual, it is determined at least partially based on the output of machine learning model 500 that the driving behavior of second vehicle 102 is unusual in step 403; and, in case machine learning model 500 provides an identification of the driving behavior of second vehicle 102 represented by the vehicle sensor information received by first layer 501 as input as unusual driving behavior or the action to minimize a risk associated with the unusual driving behavior of second vehicle 102 as output, proceeds with step 404.

In step 404, in response to identifying the unusual driving behavior in step 403, an action to minimize a risk associated with the unusual driving behavior is determined.

For example, determining the action to minimize a risk associated with an unusual driving behavior of the second vehicle in response to identifying the unusual driving behavior of the second vehicle may comprise (i) selecting the action (e.g. one or more actions) from a predefined set of actions to minimize a risk associated with an unusual driving behavior and (ii) adapting the selected action(s) to the unusual driving behavior of the second vehicle.

In case machine learning model 500 provides the action to minimize a risk associated with the unusual driving behavior of second vehicle 102 as output, step 404 is also performed by machine learning model 500. Alternatively, the determining in step 404 may be performed according to predefined rules (e.g. a predefined algorithm). To this end, the rules may for example define which action of a set of predefined actions to minimize a risk associated with an unusual driving behavior shall be determined under which conditions in response to identifying an unusual driving behavior. For example, the rules may define that, in any case, an alert information that an unusual driving behavior has been identified shall be outputted and that, in severe cases (e.g.. if additional requirements are met), additional actions shall be performed. For example, an unusual driving behavior may be defined to be a severe case if at least one of the following additional requirements is met: (i) risk score for the unusual driving behavior output by machine learning model 500 is above a predefined high risk score threshold, or classification of the unusual driving behavior output by machine learning model 500 corresponds to predefined classes of unusual driving behavior associated with a high risk like (a) skidding driving behavior or (b) drifting driving behavior or (c) uncontrolled driving behavior (e.g. due to an medical emergency of the driver like loss of consciousness) or (d) highly dangerous driving behavior (e.g. completely inadequate safety distance), or (iii) one or more driving features derivable from the first vehicle sensor information obtained in step 401 and, optionally, the further vehicle sensor information obtained in step 402 is/are associated with a high risk like (a) absolute value of the speed of the second vehicle exceeds a predefined high risk speed threshold or (b) absolute value of the deceleration of the second vehicle exceeds a predefined high risk deceleration threshold or (c) absolute value of the acceleration of the second vehicle exceeds a predefined high risk acceleration threshold or (d) absolute value of the distance of the second vehicle to the first vehicle or any further vehicle falls below a high risk safety distance threshold. It is to be understood that the invention is not limited to these examples.

For example, the action to minimize a risk associated with the unusual driving behavior is or comprises at least one of the following actions:
- communicating an alert information to further vehicles 103a and 103b, for example by transmitting the alert information via communication links 109 and 111; or
- outputting an alert information to a driver of first vehicle 101 that the driving behavior of said second vehicle has been identified as unusual, for example by outputting the alert information by driver information system 206; or
- adapting a configuration of at least one of (i) active protection system 207 of first vehicle 101 or (ii) advanced driver assistance system 208 of first vehicle 101 or (iii) automated driving system 209 of first vehicle 101; or
- adapting or causing adapting a configuration of at least one of (i) an active protection system of one or more of further vehicles 103a and 103b or (ii) an advanced driver assistance system of one or more of further vehicles 103a or 103b or (iii) an automated driving system one or more of further vehicles 103a or 103b; or
- an action of first vehicle 101; or
- a coordinated action of first vehicle101 and one or more of further vehicles 103a and 103b.

The different actions have been disclosed in more detail above.

In the following, it is assumed for exemplary purposes and without limiting the scope of the invention that the action to minimize a risk associated with an unusual driving behavior of the second vehicle is determined based on an output of machine learning model 500. In particular, it is assumed in the following that the machine learning model 500 provides a classification of the unusual driving behavior classifying the unusual driving behavior as uncontrolled driving behavior (e.g. the (e.g. uncontrolled) swerving as indicated in Fig. 1, e.g. due to a medical emergency of the driver like loss of consciousness) as output.

Accordingly, it may be determined in step 404 that an alert information shall be outputted to the driver of first vehicle 101 as well as broadcasted to surrounding vehicles like further vehicles 103a and 103b such that these vehicles can output the alert information to their drivers.

Moreover, it may be determined in step 404 that a stopping action, preferably as coordinated action in combination with a warning action and a shielding action, shall be performed.

The coordinated action may for example be determined as action to minimize a risk associated with the unusual driving behavior based on capability information of first vehicle 101 and capability information of further vehicles 103a and 103b. For example, first vehicle 101 broadcasts request information for requesting capability information to surrounding vehicles like further vehicles 103a and 103b (e.g. as part of or together with the alert information); in response to the request information, first vehicle 101 receives respective capability information from the further vehicles 103a and 103b via communication links 109 and 111. The respective capability information received from further vehicle 103a for example indicate that further vehicle 103a is available for a coordinated action and that further vehicle 103a is a compact car which transports a driver and which is not equipped with an advanced driver assistance system or an automated driving system; and the respective capability information received from further vehicle 103b for example indicate that further vehicle 103b is not available for a coordinated action (e.g. because it drives in the opposite direction). Moreover, the capability information of first vehicle 101 indicate that first vehicle 101 is available for a coordinated action and that first vehicle 101 is a delivery van which transports a driver and which is equipped with an automated driving system 209.

Based on this capability information, it may be determined in step 404 that first vehicle 101 shall perform the stopping action under control of automated driving system 209 (e.g. because it is larger than further vehicle 103a and is equipped with automated driving system 209) and that further vehicle 103a shall perform the shielding action and the warning action under control of its driver.

In optional step 405, the action to minimize a risk associated with the unusual driving behavior determined in step 404 is at least partially performed or caused to be performed.

In the following, it is assumed for exemplary purposes and without limiting the scope of the invention that the following actions to minimize a risk associated with the unusual driving behavior have been determined in step 404:
(i) communicating an alert information to further vehicles 103a and 103b;
(ii) outputting an alert information to a driver of first vehicle 101 that the driving behavior of said second vehicle has been identified as unusual, for example by outputting the alert information by driver information system 206;
(iii) coordinated action comprising stopping action performed by first vehicle 101 under control of automated driving system 209; and shielding action and warning action both performed by further vehicle 103a under control of its driver.

Action (i) may be performed by first vehicle 101 by transmitting (e.g. broadcasting) the alert information via communication links 109 and 111 by communication interface 204 of vehicle 101; and action (ii) may be performed by first vehicle 101 by outputting the alert information by driver information system 206.

The coordinated action may be at least partially performed by first vehicle 101 by adapting the configuration of automated driving system 209 of first vehicle 101 to overtake second vehicle 102 and to position in front of second vehicle 102 and, when positioned in front of second vehicle 102, to gradually reduce the speed of first vehicle 101 to stop second vehicle 102 and, optionally, by adapting the configuration of active protection system 207 of first vehicle 101 to prepare first vehicle 101 for a collision. Moreover, the coordinated action may be at least partially caused to be performed by further vehicle 103a by transmitting instruction information for the driver of further vehicle 103a, which instruct the driver to activate the hazard warning lights of further vehicle 103a and to position behind second vehicle with a minimum safety distance (e.g. 50 m or 100 m) to shield second vehicle 102 to the rear to keep following vehicles in a safe distance, to further vehicle 103a via communication link 111 by communication interface 204.

As disclosed in more detail above, the coordinated action may be dynamically adapted at least partially based on at least one of the following types of information:
- map information, in particular road topography information; or
- traffic information; or
- weather information..

For example, if map information and/or traffic information and/or weather information indicate that the driving conditions detoriate on an upcoming road section, the stopping action may be adapted such that the second vehicle shall be stopped before this road section. Exemplary indications of detorations on an upcoming road section are map information such as road topography information which indicate that there is an obstacle (e.g. a steep descending slope and/or a sharp curves) on the upcoming road section, or traffic information which indicate that there is a traffic jam on the upcoming road section; or weather information which indicate that the upcoming road section is icy.

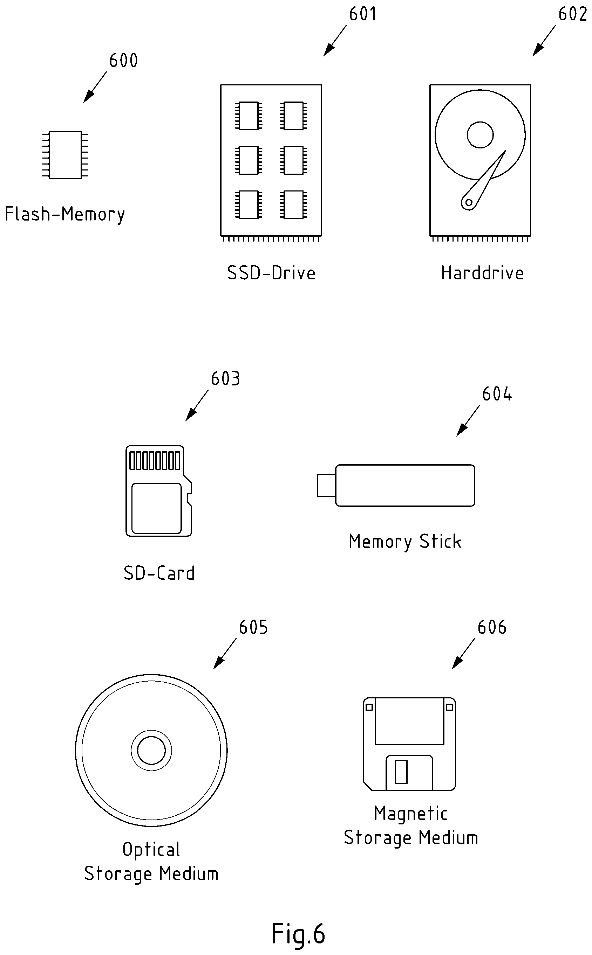

Fig. 6 is a schematic illustration of examples of tangible and non-transitory computer-readable storage media according to the present invention that may for example be used to implement one or more of the memories 202, 203, 302 and 303 of Figs. 2 and 3. To this end, Fig. 6 displays a flash memory 600, which may for example be soldered or bonded to a printed circuit board, a solid-state drive 601 comprising a plurality of memory chips (e.g. Flash memory chips), a magnetic hard drive 602, a Secure Digital (SD) card 603, a Universal Serial Bus (USB) memory stick 604, an optical storage medium 605 (such as for instance a CD-ROM or DVD) and a magnetic storage medium 606.

In the present disclosure, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes, steps and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

It will be understood that all disclosed embodiments are only exemplary, and that any feature presented for a particular embodiment may be used with any aspect of the invention on its own or in combination with any feature presented for the same or another particular embodiment and/or in combination with any other feature not mentioned. In particular, the embodiments disclosed in this specification shall also be understood to be disclosed in all possible combinations with each other, as far as it is technically reasonable and the embodiments are not alternatives with respect to each other. It will further be understood that any feature disclosed for an embodiment in a particular category (method/apparatus/computer program/system) may also be used in a corresponding manner in an embodiment of any other category. It should also be understood that presence of a feature in the disclosed embodiments shall not necessarily mean that this feature forms an essential feature of the invention and cannot be omitted or substituted.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

The statement that a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible. The sequence of all method steps disclosed above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of exemplary embodiments. It should be noted that there are alternative ways and variations which are obvious to a skilled person in the art and can be implemented without deviating from the scope of the appended claims.

## Claims

1. Method for recognizing a driving behavior of a vehicle, the method comprising:
- obtaining (401) first vehicle sensor information, wherein said first vehicle sensor information is associated with an environment (106) of a first vehicle (101), wherein said environment (106) of said first vehicle (101) includes a second vehicle (102), and wherein said first vehicle sensor information at least partially represents the driving behavior of said second vehicle (102);
- identifying (403) an unusual driving behavior of said second vehicle (102), wherein said identifying an unusual driving behavior of said second vehicle (102) comprises at least partially analyzing said first vehicle sensor information by means of a machine learning model (500);
- in response to identifying said unusual driving behavior of said second vehicle (102), determining (404) an action to minimize a risk associated with said unusual driving behavior.

2. The method according to claim 1, wherein said first vehicle sensor information is at least partially captured by one or more of the following sensors (205):
- a distance sensor, in particular a Light Detection and Ranging, LiDAR, sensor or a radar sensor, or
- an imaging sensor, in particular a camera sensor, or
- a motion sensor, in particular a speed sensor or an accelerometer, or
- a positioning sensor.

3. The method according to claim 1 or 2, wherein said analyzing said first vehicle sensor information by means of a machine learning model comprises:
- processing, by a first layer (501) of said machine learning model (500), said first vehicle sensor information to detect one or more anomalies in said first vehicle sensor information, and
- evaluating, by a second layer (502) of said machine learning model (500), said one or more anomalies in said first vehicle sensor information detected by said first layer (501) of said machine learning model (500).

4. The method according to claim 3, wherein said first layer of said machine learning model is based on one or more baseline models (501a, 501b, 501c)which have been at least partially trained based on a collection of historical vehicle sensor information representing usual driving behaviors of vehicles, and wherein each anomaly in the driving behavior of said second vehicle (102) represents a deviation of said first vehicle sensor information from said baseline model(s).

5. The method according to any one of claims 3 or 4, wherein said second layer (501) of said machine learning model (500) uses at least one of the following types of information for evaluating said one or more anomalies in said first vehicle sensor information detected by said first layer of said machine learning model:
- position information representing a current position of the first vehicle; or- map information; or
- time information; or
- traffic information; or
- weather information; or
- frequency of said one or more anomalies in said first vehicle sensor information detected by said first layer (501) of said machine learning model (500); or
- duration of said one or more anomalies in said first vehicle sensor information detected by said first layer (501) of said machine learning model (500); or
- severity of said one or more anomalies in said first vehicle sensor information detected by said first layer (501) of said machine learning model (500).

6. The method according to any one of claims 3 to 5, wherein said identifying an unusual driving behavior of said second vehicle comprises:
- determining that at least one of said one or more anomalies in said first vehicle sensor information detected by said first layer (501) of said machine learning model (500) represents an unusual driving behavior.

7. The method according to any one of claims 1 to 6, wherein further vehicle sensor information is obtained from one or more further vehicles , and wherein said identifying an unusual driving behavior of said second vehicle (102) further comprises at least partially analyzing said further vehicle sensor information by means of said machine learning model (500).

8. The method according to any one of claims 1 to 7, wherein said action to minimize a risk associated with said unusual driving behavior is or comprises at least one of the following actions:
- communicating or causing communicating an alert information to one or more further vehicles (103a, 103b)that the driving behavior of said second vehicle (102) has been identified as unusual; or
- outputting or causing outputting an alert information to a driver of said first vehicle (101) that the driving behavior of said second vehicle (102) has been identified as unusual; or
- adapting or causing adapting a configuration of at least one of (i) an active protection system of said first vehicle (101) or (ii) an advanced driver assistance system of said first vehicle (101) or (iii) an automated driving system of said first vehicle (101); or
- adapting or causing adapting a configuration of at least one of (i) an active protection system of one or more further vehicles (103a, 103b) or (ii) an advanced driver assistance system of said further vehicles (103a, 103b) or (iii) an automated driving system of said further vehicles (103a, 103b); or
- an action of said first vehicle (101); or
- a coordinated action of said first vehicle (101) and one or more further vehicles (103a, 103b).

9. The method according to claim 8, wherein said coordinated action comprises at least one of (i) a shielding action for shielding said second vehicle (102) or (ii) a stopping action for stopping said second vehicle (102) or (iii) a guiding action for guiding said second vehicle (102).

10. The method according to any one of claims 8 or 9, wherein said coordinated action is negotiated between said first vehicle (101) and said further vehicles (103a, 103b).

11. The method according to any one of claims 1 to 10, wherein said action to minimize a risk associated with said unusual driving behavior is determined at least partially based on at least one of the following types of information:
- map information, in particular road topography information; or
- traffic information; or
- weather information.

12. The method according to any of claims 1 to 11, wherein said method further comprises:
- dynamically adapting said action to minimize a risk associated with said unusual driving behavior at least partially based on at least one of the following types of information:
- map information, in particular road topography information; or
- traffic information; or
- weather information; or
- newly obtained vehicle sensor information.

13. The method according to any one of claims 1 to 12, wherein said method is performed by at least one of (i) said first vehicle (101) or (ii) a vehicle unit of said first vehicle (101) or (iii) a remote device (104), in particular a server or a traffic infrastructure device

14. A computer program, the computer program, when executed by a processor, causing an apparatus (200, 300) to perform the method according to any of claims 1 to 13.

15. An apparatus (2002, 300), the apparatus comprising means configured to perform the method according to any of claims 1 to 13.
